# DEMANDE DE BREVET EUROPEEN

(11) **EP 0 939 352 A1**
(43) Date de publication de la demande: **01.09.1999**
(21) Numéro de dépôt: 99400310.1
(22) Date de dépôt: 10.02.1999
(51) Int. Cl.: G05B 9/02

(54) **Dispositif d'alimentation électrique d'électrovannes**

(30) Priorité: 26.02.1998 FR 9802330
(71) Demandeur: Air Liquide Electronics Systems, 75007 Paris (FR)
(72) Inventeur: Viton, Michel, 38170 Seyssinet (FR)
(74) Mandataire: Vesin, Jacques

(57) **Abrégé**

L'invention concerne un dispositif d'alimentation électrique (1) d'au moins une électrovanne (3), comprenant une ligne d'alimentation électrique (5) de ladite au moins une électrovanne (3), et au moins un interrupteur (7,9,11) disposé dans ladite ligne d'alimentation électrique (5) et commandé par un détecteur associé d'alarme (13,15,17) en une position ouverte coupant l'alimentation électrique de ladite au moins une électrovanne (3) dans le cas d'une détection d'une alarme. Le dispositif comprend en outre, associé audit au moins un interrupteur (7,9,11) commandé par ledit détecteur associé (13,15,17), un interrupteur à commande manuelle (19,21,23) dont un contact mobile principal (25) est disposé en parallèle dudit interrupteur (7,9,11) commandé par ledit détecteur d'alarme associé (13,15,17), ledit interrupteur à commande manuelle (19,21,23) rendant dans sa position fermée ledit interrupteur (7,9,11) commandé par ledit détecteur d'alarme (13,15,17) inopérant pour permettre une intervention sur ce dernier sans que celui ne provoque la coupure de l'alimentation électrique de ladite au moins une électrovanne (3).

## Description

L'invention est relative à un dispositif d'alimentation électrique d'au moins une électrovanne comprenant une ligne d'alimentation électrique de ladite au moins une électrovanne, et au moins un interrupteur disposé dans cette ligne d'alimentation électrique et commandé par un détecteur associé d'alarme en une position ouverte, coupant l'alimentation électrique de ladite au moins une électrovanne, dans le cas d'une détection d'une alarme.

La fabrication de circuits micro-électroniques nécessite l'utilisation de divers gaz dits "de travail" comme par exemple Cl₂, NH₃, HCI, HBr, NF₃ , WF₆ etc. qui sont considérés pour la plupart comme dangereux pour l'homme du fait de leur toxicité et/ou de leur inflammabilité.

Ces gaz sont acheminés vers des postes de consommation, tels que des postes de fabrication de circuits micro-électroniques, par l'intermédiaire d'une installation d'approvisionnement en gaz de ces postes, comprenant, pour chaque gaz, au moins un poste de fourniture de gaz, également connu sous le nom "gas cabinet" , et, éventuellement, un poste de distribution du gaz en provenance d'un poste de fourniture pour pouvoir alimenter plusieurs postes de fabrication à la fois.

Ces installations d'approvisionnement en gaz sont généralement équipées d'électrovannes et d'une unité centrale de commande de celles-ci pour réguler la circulation des gaz dans l'installation.

Du fait de la toxicité des gaz employés, le contrôle du fonctionnement d'une telle installation d'approvisionnement est une priorité absolue. C'est pourquoi de telles installations sont en outre équipées d'un dispositif spécifique d'alimentation électrique des électrovannes dans lequel des interrupteurs sont disposés en série dans une ligne d'alimentation électrique des électrovannes. Chaque interrupteur est commandé par un détecteur associé d'alarme, tel qu'un détecteur de fuite de gaz, d'incendie ou de feu, en une position ouverte coupant l'alimentation électrique de l'ensemble des électrovannes dans le cas d'une détection d'une alarme. Ainsi, lorsqu'une alarme survient, chaque électrovanne est commandé en position fermée et l'installation est arrêtée.

Mais ce dispositif d'alimentation connu présente l'inconvénient que l'on doit complètement arrêter l'installation pour pouvoir procéder aux opérations de maintenance que chaque détecteur d'alarme doit régulièrement subir. En effet, lors d'une telle opération de maintenance, le détecteur concerné commande automatiquement l'ouverture de l'interrupteur auquel il est associé, ce qui provoquerait, si l'installation n'était par arrêtée, la coupure intempestive de l'alimentation électrique de l'ensemble des électrovannes et l'arrêt de l'installation d'approvisionnement en gaz.

Un tel arrêt est coûteux et se répercute sur l'ensemble de la chaîne de fabrication des circuits micro-électroniques.

L'invention vise à pallier cet inconvénient en proposant un dispositif d'alimentation permettant d'éviter ces arrêts inutiles et coûteux.

A cet effet, l'invention a pour un objet un dispositif d'alimentation électrique d'au moins une électrovanne, comprenant une ligne d'alimentation électrique de ladite au moins une électrovanne, et au moins un interrupteur disposé dans ladite ligne d'alimentation électrique et commandé par un détecteur d'alarme associé en une position ouverte, coupant l'alimentation électrique de ladite au moins une électrovanne, dans le cas d'une détection d'une alarme, caractérisé en ce qu'il comprend en outre, associé audit au moins un interrupteur commandé par ledit détecteur associé, un interrupteur à commande manuelle dont un contact mobile principal est disposé en parallèle dudit interrupteur commandé par ledit détecteur d'alarme associé, ledit interrupteur à commande manuelle rendant dans sa position fermée ledit interrupteur commandé par ledit détecteur d'alarme inopérant pour permettre une intervention sur ce dernier sans que celui ne provoque la coupure de l'alimentation électrique de ladite au moins une électrovanne.

Le dispositif selon l'invention peut de plus comporter une ou plusieurs des caractéristiques suivantes :
- il comprend des moyens de signalisation de la position dudit au moins un interrupteur à commande manuelle,
- les moyens de signalisation comprennent des moyens d'affichage et un contact mobile secondaire porté par ledit au moins un interrupteur à commande manuelle et couplé au contact mobile principal de celui-ci pour transmettre un signal d'affichage aux moyens d'affichage en position fermée de l'interrupteur à commande manuelle.

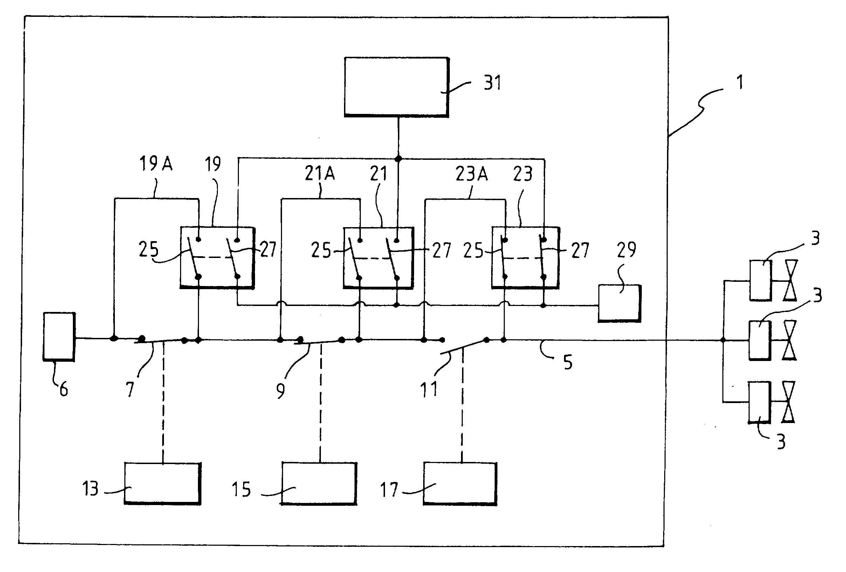

D'autres caractéristiques et avantages de l'invention ressortiront de la description suivante, donnée à titre d'exemple, sans caractère limitatif, en regard du dessin annexé représentant un schéma électrique du dispositif selon l'invention.

Sur la figure unique est représenté un dispositif d'alimentation électrique 1 de trois électrovannes 3 d'une installation d'approvisionnement en gaz (non représentée) comme par exemple une installation de fourniture de gaz également connue sous le nom de « gas cabinet ».

Ce dispositif 1 selon l'invention comprend une ligne d'alimentation électrique 5 raccordée à son entrée à une source 6 de tension et en sortie aux trois électrovannes 3. Dans cette ligne d'alimentation électrique 5 sont disposés en série trois interrupteurs 7, 9 et 11.

Chacun des trois interrupteurs 7, 9 et 11 est commandé par un détecteur associé d'alarme 13, 15 et 17 tel que par exemple un détecteur de fuites de gaz, d'incendie ou encore de feu.

Lorsqu'un détecteur, par exemple le détecteur 17 détecte une alarme ou subit une opération de maintenance, il commande automatiquement l'ouverture de l'interrupteur 11 comme cela est représenté sur la figure unique, de sorte que l'alimentation électrique des électrovannes 3 est coupée et que celles-ci se trouvent toutes en position fermée.

Afin qu'en cas de maintenance par exemple du détecteur 17, l'ouverture de l'interrupteur 11 ne conduise à l'arrêt de toute l'installation d'approvisionnement en gaz, le dispositif 1 comprend en outre pour chaque interrupteur 7, 9 et 11 un interrupteur à commande manuelle associé 19, 21 et 23 branché en parallèle.

Chaque interrupteur à commande manuelle 19, 21, 23 comprend d'une part un contact mobile principal 25 disposé dans une ligne électrique 19 A, 21A, ou 23A en dérivation de l'interrupteur 7, 9 ou 11 auquel il est associé et d'autre part un contact mobile 27 secondaire couplé mécaniquement au contact mobile principal 25. Une extrémité de chaque contact mobile secondaire 27 est reliée à une source de tension 29 et l'autre extrémité de chaque contact mobile secondaire 27 est reliée à des moyens d'affichage 31 des positions des interrupteurs 19, 21 et 23 à commande manuelle.

Si un opérateur souhaite effectuer une opération de maintenance par exemple sur le détecteur 17, il ferme de façon manuelle l'interrupteur 23 de sorte que l'interrupteur 11 associé au détecteur 17 est rendu inopérant, car, du fait que le contact mobile principal 25 de l'interrupteur 23 est fermé, le courant d'alimentation peut passer par la ligne électrique 23A en dérivation pour être acheminé aux divers électrovannes 3.

Le contact mobile secondaire 27 de l'interrupteur 23 est également fermé, ce qui provoque qu'un signal électrique est envoyé au moyen d'affichage 31 pour informer l'opérateur de la position fermée de l'interrupteur 23 et du fait que l'interrupteur 11 est inopérant.

Ainsi, des opérations de maintenance peuvent être effectuées sur le détecteur 17 sans qu'il ne se produise un arrêt inutile de l'installation d'approvisionnement en gaz.

Après l'opération de maintenance, l'opérateur bascule l'interrupteur 23 en position ouverte, de sorte que le système de sécurité formé par le détecteur 17 et l'interrupteur 11 est à nouveau rendu actif.

En variante, on peut prévoir d'équiper le dispositif 1 d'un temporisateur et d'une unité d'alarme reliés aux moyens d'affichage pour avertir l'opérateur après un certain délai que l'interrupteur 23 est encore dans sa position rendant l'interrupteur et ainsi le détecteur d'alarme inopérant.

Le dispositif ainsi construit permet de procéder à des opérations de maintenance des détecteurs sans qu'un arrêt de toute l'installation soit nécessaire, ce qui permet de réduire le coût de fonctionnement d'une telle installation.

## Revendications

1. Dispositif d'alimentation électrique (1) d'au moins une électrovanne (3), comprenant une ligne d'alimentation électrique (5) de ladite au moins une électrovanne (3), et au moins un interrupteur (7,9,11) disposé dans ladite ligne d'alimentation électrique (5) et commandé par un détecteur d'alarme (13,15,17) associé en une position ouverte, coupant l'alimentation électrique de ladite au moins une électrovanne (3), dans le cas d'une détection d'une alarme, caractérisé en ce qu'il comprend en outre, associé audit au moins un interrupteur (7,9,11) commandé par ledit détecteur associé (13,15,17), un interrupteur à commande manuelle (19,21,23) dont un contact mobile principal (25) est disposé en parallèle dudit interrupteur (7,9,11) commandé par ledit détecteur d'alarme associé (13,15,17), ledit interrupteur à commande manuelle (19,21,23) rendant dans sa position fermée ledit interrupteur (7,9,11) commandé par ledit détecteur d'alarme (13,15,17) inopérant pour permettre une intervention sur ce dernier sans que celui ne provoque la coupure de l'alimentation électrique de ladite au moins une électrovanne (3).

2. Dispositif selon la revendication 1, caractérisé en ce qu'il comprend des moyens de signalisation (27,29,31) de la position dudit au moins un interrupteur à commande manuelle (19,21,23).

3. Dispositif selon la revendication 2, caractérisé en ce les moyens de signalisation (27,29,31) comprennent des moyens d'affichage (31) et un contact mobile secondaire (27) porté par ledit au moins un interrupteur à commande manuelle (19,21,23) et couplé au contact mobile principal (25) de celui-ci pour transmettre un signal d'affichage aux moyens d'affichage (31) en position fermée de l'interrupteur à commande manuelle (19,21,23).
